# EUROPÄISCHE PATENTSCHRIFT

(11) **EP 0 866 993 B1**
(45) Veröffentlichungstag und Bekanntmachung des Hinweises auf die Patenterteilung: **25.02.2004**
(21) Anmeldenummer: 97935534.4
(22) Anmeldetag: 22.07.1997
(51) Int. Cl.: G02B 21/00, G02B 21/06

(54) **KONFOKALES MIKROSKOP MIT EINEM DOPPELOBJEKTIV-SYSTEM**
CONFOCAL MICROSCOPE WITH DOUBLET SYSTEM
MICROSCOPE CONFOCAL A SYSTEME DE DOUBLET

(30) Priorität: 23.07.1996 DE 19629725
(43) Veröffentlichungstag der Anmeldung: 30.09.1998
(73) Patentinhaber: CARL ZEISS JENA GmbH, 07745 Jena (DE)
(72) Erfinder: STELZER, Ernst, H., K., D-74909 Meckesheim (DE); LINDEK, Steffen, D-68723 Plankstadt (DE)
(74) Vertreter: Hampe, Holger
(86) Internationale Anmeldenummer: PCT/EP1997/003954
(87) Internationale Veröffentlichungsnummer: WO 1998/003892

(56) Entgegenhaltungen:
- DE-A- 4 326 473
- DE-U- 9 408 066
- US-A- 3 517 980

## Beschreibung

Die Erfindung betrifft ein konfokales Mikroskop mit einem Doppelobjektiv-System aus einem ersten Objektiv, das zur Fokussierung von Licht einer Objektbeleuchtungsquelle auf einen Objektpunkt in einem Beleuchtungsstrahlengang vorgesehen ist, und einem zweiten Objektiv, das zur Sammlung von Licht, das von dem Objektpunkt ausgeht, in einem Beobachtungsstrahlengang vorgesehen ist, wobei die Beobachtungsrichtung des zweiten Objektives unter einem Winkel zur Beleuchtungsrichtung des ersten Objektives steht.

Ein Rastermikroskop mit einem Doppelobjektiv-System der .vorstehend genannten Art ist aus der DE 43 26 473 A1 bekannt. Bei diesem bekannten Rastermikroskop wird kollimiertes Laserlicht durch das erste Objektiv im Beleuchtungsstrahlengang auf einen Objektpunkt fokussiert. Das zweite Objektiv ist relativ zu dem ersten Objektiv so angeordnet, daß die optischen Achsen der beiden Objektive senkrecht aufeinander stehen und der von dem ersten Objektiv beleuchtete Objektpunkt im Brennpunkt des zweiten Objektives liegt, so daß die Beobachtungsrichtung des zweiten Objektives unter einem rechten Winkel zur Beleuchtungsrichtung des ersten Objektives steht. Das von dem Objektpunkt ausgehende und von dem zweiten Objektiv gesammelte Beobachtungslicht wird von einer dem zweiten Objektiv im Beobachtungsstrahlengang nachgeschalteten Linse auf eine Lochblende fokussiert, wobei ein Lichtdetektor die Intensität des durch die Lochblende hindurchtretenden Lichtes mißt. Durch Abrasterung eines Objektbereiches kann dann ein entsprechendes Bild aus den Meßinformationen des Lichtdetektors erzeugt werden.

Aus der Druckschrift DE 94 08 066 U1 ist außerdem eine Auflichtbeleuchtung für Stereomikroskope bekannt, die das zu beobachtende Objekt möglichst aus der Richtung der Betrachtungsoptik beleuchtet. Sie ist derart realisiert, daß die Beleuchtungsanordnung mit dem Mikroskopkörper und damit mit dem als Detektoranordnung wirkenden Mikroskopobjektiv eine bauliche Einheit bildet.

Diese Beleuchtungseinrichtung unterscheidet sich von dem erfindungsgemäßen Doppelobjektiv-System insbesondere dadurch, daß sie nicht für den Einsatz in einem konfokalen Mikroskop geeignet ist und daß sie möglichst aus der Detektionsrichtung beleuchtet, wohingegen bei dem erfindungsgemäßen Doppelobjektiv-System möglichst ein rechter Winkel zwischen der Beleuchtungsrichtung und der Detektionsrichtung realisiert wird.

Das aus der DE 43 26 473 A1 bekannte Rastermikroskop hat bereits eine extrem hohe Auflösung. Diese wird insbesondere dadurch erreicht, daß das im Fokalbereich erfaßte konfokale Volumen aufgrund der sich im Objektpunkt unter einem rechten Winkel schneidenden optischen Achsen des Beleuchtungsstrahlenganges und des Beobachtungsstrahlenganges minimiert wird. Betrachtet man in grober Näherung das Beleuchtungsvolumen im Objektbereich als ein längs der Beleuchtungsachse langgestrecktes Ellipsoid und das Beobachtungsvolumen des zweiten Objektives im Objektbereich als ein längs der optischen Achse des zweiten Objektives langgestrecktes Ellipsoid, so ergibt sich aufgrund der Überlagerung dieser Ellipsoide im Fokalbereich bzw. Objektpunktbereich ein dem Schnittvolumen von Beleuchtungsvolumen und Beobachtungsvolumen im wesentlichen entsprechendes konfokales Volumen, welches entsprechend kleiner ist. Je kleiner das so betrachtete konfokale Volumen ist, desto besser ist die Auflösung des Mikroskops.

Eine analoge Betrachtungsweise geht davon aus, daß die Intensitätsverteilung des Objektbeleuchtungslichts im Fokalbereich des ersten Objektives durch die sogenannte Beleuchtungs-Punktverwaschungsfunktion [illumination point-spread-function] beschrieben wird und daß die Detektionswahrscheinlichkeit für das vom Fokalbereich ausgehende Licht durch das zweite Objektiv bei Verwendung einer Detektionslochblende von der Beobachtungs-Punktverwaschungsfunktion [detection point-spread-function] beschrieben wird.

Die resultierende konfokale Punktverwaschungsfunktion KPVF eines konfokalen Mikroskops ist das Produkt der Beleuchtungs-Punktverwaschungsfunktion und der Beobachtungs-Punktverwaschungsfunktion. Je ausgedehnter die KPVF ist, desto schlechter ist die Auflösung des Mikroskops. Durch die jetzt annähernd senkrechte Anordnung der Beleuchtungs-Punktverwaschungsfunktion und der Beobachtungs-Punktverwaschungsfunktion zueinander wird die vergleichsweise große Ausdehnung der Beleuchtungs-Punktverwaschungsfunktion längs der optischen Achse des ersten Objektives durch die geringe Ausdehnung der Beobachtungs-Punktverwaschungsfunktion längs dieser Achse kompensiert, so daß längs aller drei Raumachsen eine etwa gleich gute Auflösung erreicht wird. Aufgrund der sich im Objektpunkt senkrecht schneidenden Strahlengänge der Beleuchtung und der Beobachtung wird daher ein sehr gutes Auflösungsvermögen erzielt.

Für die Realisierung der einander im objektpunkt kreuzenden Strahlengänge für die Beleuchtung und die Beobachtung ist gemäß der DE 43 26 473 A1 ein Spezialaufbau mit vollständiger Separation des Beobachtungsstrahlenganges vom Beleuchtungsstrahlengang vorgesehen. Ein solcher Spezialaufbau beansprucht vergleichsweise viel Platz in den beiden senkrecht aufeinanderstehenden Richtungen der Strahlengänge für Beleuchtung und Beobachtung und ist entsprechend schwieriger zu handhaben als konventionelle Rastermikroskope, bei denen der Beleuchtungsstrahlengang und der Beobachtungsstrahlengang zusammenfallen und die Fokussierung des Objektbeleuchtungslichtes und die Sammlung des von dem Objektpunkt kommenden Beobachtungslichtes durch dasselbe Objektiv erfolgt.

Durch die vorliegende Erfindung wird aufgabengemäß ein Weg aufgezeigt, wie das aus der DE 43 26 473 A1 bekannte optische Prinzip bei einem Lichtmikroskop anwendbar ist, ohne vom konstruktiven Aufbau eines konventionellen Mikroskops abzuweichen.

Die vorliegende Erfindung wird durch den Anspruch 1 definiert: Hierzu wird erfindungsgemäß vorgeschlagen, daß die beiden Objektive unter Bildung einer beide Objektive enthaltenden zusammenhängenden Baugruppe oder Baueinheit an einem gemeinsamen Halter befestigt sind, wobei die Doppelobjektiv-Baueinheit eine Lichtdurchtrittsöffnung für die Zuführung von Licht einer Objektbeleuchtungsquelle aufweist und ferner ein Lichtumlenksystem enthält, das den Beleuchtungsstrahlengang oder/und den Beobachtungsstrahlengang derart formt, daß das von dem zweiten Objektiv kommende Beobachtungslicht die Doppelobjektiv-Baueinheit durch die Lichtdurchtrittsöffnung verläßt.

Das erfindungsgemäße Doppelobjektiv-System ist aufgrund des Lichteintritts und des Lichtaustritts durch eine gemeinsame Lichtdurchtrittsöffnung hindurch als strahlengangkompatibles Objektivsystem für ein im übrigen konventionelles und für Beleuchtung und Beobachtung durch dasselbe Objektiv ausgelegtes Mikroskop, insbesondere Rastermikroskop, verwendbar, wobei es bei dem konventionellen Mikroskop gegen das herkömmliche Einzelobjektiv auszutauschen ist.

Es kann daher das aus der DE 43 26 473 A1 bekannte optische Prinzip zur Erzielung einer extrem hohen Auflösung in allen drei Raumrichtungen in Kombination mit einem herkömmlichen Mikroskopaufbau verwirklicht werden.

Erfindungsgemäß sind die beiden Objektive und das Lichtumlenksystem in einem gemeinsamen Gehäuse untergebracht, welches eine Öffnung für die Einführung von Licht einer Objektbeleuchtungsquelle und für die Herausführung des Beobachtungslichtes hat.

Vorzugsweise ist das Gehäuse an der Objektivhalterung eines im übrigen konventionellen Mikroskops insbesondere drehbar um die Halterungsachse befestigbar, um den Beleuchtungsstrahlengang der Doppelobjektiv-Baueinheit in den Beleuchtungsstrahlengang des Mikroskops zu integrieren und um den Beobachtungsstrahlengang der Doppelobjektiv-Baueinheit in den Beobachtungsstrahlengang des Mikroskops zu integrieren.

Hinsichtlich der angestrebten hohen Auflösung betrigt der Winkel zwischen der Beleuchtungsrichtung des ersten Objektives und der Beobachtungsrichtung des zweiten Objektives erfindungsgemäß etwa 90°. Jedoch werden die Vorteile der Erfindung in ausreichendem Maße auch dann noch erzielt, wenn der Winkel in nicht zu großem Maße von 90° abweicht.

Die Begriffe Beleuchtungsrichtung und Beobachtungsrichtung beziehen sich auf die Richtung des Austrittsstrahlenganges des ersten Objektivs bzw. auf die Richtung des Eintrittsstrahlenganges des zweiten Objektivs.

Gemäß einer Weiterbildung der Erfindung kann vorgesehen sein, daß die Objektive relativ zueinander verstellbar sind, um den Winkel zwischen der Beleuchtungsrichtung und der Beobachtungsrichtung wahlweise ändern zu können. Wird der Winkel beispielsweise etwas kleiner als 90° eingestellt, so ist der Probenraum vor der Doppelobjektiv-Baueinheit weniger stark eingeschränkt, ohne daß größere Kompromisse hinsichtlich der angestrebten Auflösung hingenommen werden müßten.

Die Objektive haben vorzugsweise gleiche und insbesondere große numerische Apertur und können aus herkömmlichen Linsenelementen bestehen. Vorzugsweise sollten die Objektive einen großen Arbeitsabstand haben.

Zur Verkleinerung des Winkels zwischen den optischen Achsen der beiden Objektive können Linsenelemente der Objektive angeschliffen sein. Dadurch ist das Sehfeld der einzelnen Objektive zwar nicht mehr rund. Dies hat jedoch bei Einsatz des Doppelobjektiv-Systems in einem Rastermikroskop mit Strahlrasterung keinen Einfluß auf die Abbildungseigenschaften, da der Strahl jeweils nur in einer Dimension gerastert wird, die dann senkrecht zu den optischen Achsen der Objektive liegt.

Durch die Verwendbarkeit der erfindungsgemäßen Doppelobjektiv-Baueinheit in einem konventionellen Rastermikroskopaufbau ergibt sich ferner der wesentliche Vorteil, daß auch die zur Rasterung (Strahlrasterung und/oder Objektrasterung) erforderlichen Strahl- bzw. Objektbewegungsmittel konventioneller Art sein können und keiner besonderen Anpassung bedürfen. Die Strahlrasterung erfolgt üblicherweise senkrecht zu den optischen Achsen der beiden Objektive. Hierdurch ist bei Strahlrasterung zu gewährleisten, daß der Beleuchtungs- und der Beobachtungspunkt gemeinsam bewegt werden.

Vorteilhafterweise erlaubt die erfindungsgemäße Doppelobjektiv-Baueinheit die Verwendung eines Immersionsmediums bei Einsatz in einem Rastermikroskop.

Das Lichtumlenksystem der Doppelobjektiv-Baueinheit kann beispielsweise Spiegel, dichroitische Spiegel, Strahlteiler oder optische Fasern enthalten.

Vorzugsweise sind wenigstens einige optische Elemente des Lichtumlenksystems zu Justierzwecken bewegbar in dem Gehäuse befestigt und/oder bei Bedarf austauschbar. Entsprechendes gilt für die Objektive.

Die Doppelobjektiv-Baueinheit nach der Erfindung ist in einfacher Weise im wesentlichen wie ein herkömmliches Objektiv bei einem konventionellen Mikroskop handhabbar und kann in einem Fluoreszenzmikroskop, bei dem die Fluoreszenzfarbstoffe durch Ein- oder auch durch Mehrphotonenabsorption angeregt werden, eingesetzt werden. Bei der Beobachtung von Fluoreszenzlicht können geeignete optische Elemente, welche die Wellenlänge des Lichtes beeinflussen, vorgesehen sein. Derartige optische Elemente, bei denen es sich beispielsweise um spektrale Filter handeln kann, können in den innerhalb der Doppelobjektiv-Baueinheit getrennt verlaufenden Strahlengängen der Beleuchtung und Beobachtung eingesetzt sein. Andererseits ist die Einführung solcher Elemente auch an einer Stelle möglich, an der die Strahlengänge gemeinsam verlaufen.

Die erfindungsgemäße Doppelobjektiv-Baueinheit kann alternativ auch bei einem Mikroskop eingesetzt werden, das mit Streulicht arbeitet. Bei der Beobachtung von Streulicht können geeignete optische Elemente, welche die Polarisationsrichtung des Lichtes beeinflussen, vorgesehen sein.

Derartige Polarisatoren können beispielsweise in die in der Doppelobjektiv-Baueinheit getrennt verlaufenden Strahlengänge für Beleuchtung und Beobachtung eingesetzt werden. Alternativ ist jedoch auch der Einsatz an einer Stelle möglich, an der die beiden Strahlengänge gemeinsam verlaufen.

Das Doppelobjektiv-System nach der Erfindung kann derart ausgebildet sein, daß in bezug auf die genannten beiden Strahlengänge Beleuchtung und Beobachtung vertauscht werden können. Eine weitere Möglichkeit besteht darin, bei Bedarf jeweils nur den einen oder den anderen Strahlengang in konventioneller Weise gleichzeitig als Beleuchtungsstrahlengang und als Beobachtungsstrahlengang zu nutzen, etwa um visuelle Beobachtung des Objektpunktes durch ein Okularsystem durchzuführen.

Ein Ausführungsbeispiel der Erfindung wird nachstehend unter Bezugnahme auf die Zeichnung näher erläutert.

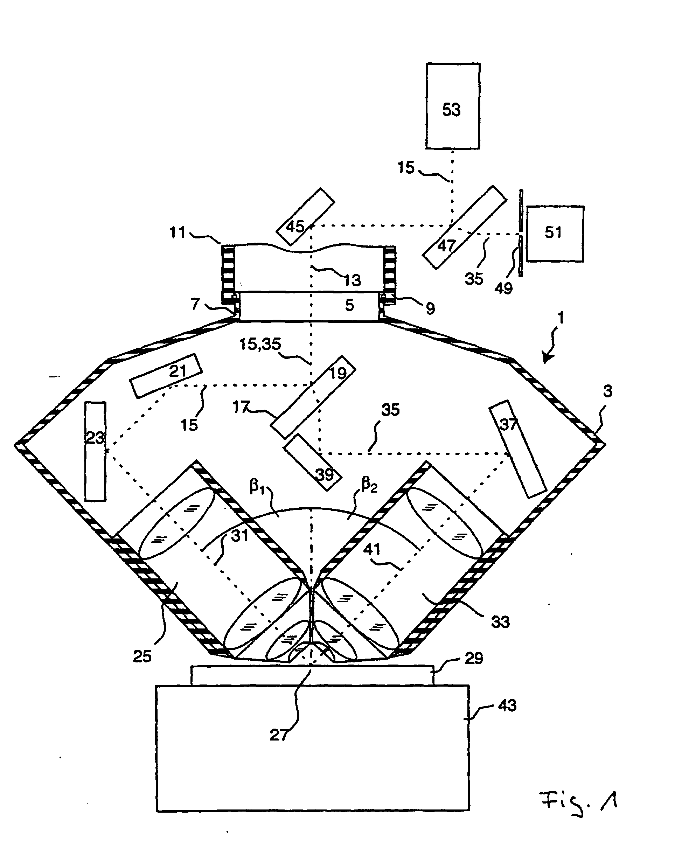

Fig. 1 zeigt ein Ausführungsbeispiel eines erfindungsgemäßen Doppelobjektiv-Systems als zusammenhängende und als Einheit handhabbare Baugruppe 1 (Doppelobjektiv-Baueinheit) in einer schematischen Schnittdarstellung. Die Doppelobjektiv-Baueinheit 1 hat ein Gehäuse 3 mit einer Lichtdurchtrittsöffnung 5, die von einer Fassung 7 umgeben ist. Die Doppelobjektiv-Baueinheit 1 ist an der Fassung 7 mit der schematisch angedeuteten Objektivhalterung 9 eines bei 11 gebrochen angedeuteten Mikroskops zu verbinden, so daß die Lichtdurchtrittsöffnung 5 in bezug auf die optische Tubusachse 13 zentriert ist, wobei die Doppelobjektiv-Baueinheit 1 wahlweise um die optische Achse 13 drehbar ist.

Die Doppelobjektiv-Baueinheit 1 weist einen Beleuchtungsstrahlengang 15 auf, der einen Teil des gesamten Beleuchtungsstrahlengangs des Mikroskops 11 bildet. Wie bei einem Auflichtmikroskop tritt das von einer Objektbeleuchtungsquelle 53 des Mikroskops 11 über einen Strahlteiler 47 und Spiegel 45 kommende Licht längs der optischen Achse 13 durch die Öffnung 5 hindurch in das Objektivsystem 1 ein. Das Objektbeleuchtungslicht wird dann an der Oberfläche 17 des Strahlteilers 19 eines in dem Gehäuse 3 angeordneten Lichtumlenksystems seitlich reflektiert und trifft dann nacheinander auf die Umlenkspiegel 21 und 23, so daß schließlich das vom Umlenkspiegel 23 reflektierte Licht durch ein erstes Objektiv 25 im Beleuchtungsstrahlengang 15 tritt. Das erste Objektiv 25 dient dazu, das Licht von der Objektbeleuchtungsquelle auf einen Objektpunkt 27 eines Objektes zu fokussieren, welches auf einem Objektträger 29 aufliegt.

Wie aus Fig. 1 zu ersehen, ist die optische Achse 31 des ersten Objektives 25 gegenüber der optischen Tubusachse 13 des Mikroskops 11 um einen Winkel b₁ geneigt.

Zur Beobachtung des Objektpunktes 27 weist die Doppelobjektiv-Baueinheit 1 in dem Gehäuse 3 ein zweites Objektiv 33 auf, das in dem Beobachtungsstrahlengang 35 angeordnet ist und von dem Objektpunkt 27 kommendes Licht sammelt. An der Lichtaustrittsseite des zweiten Objektivs 33 ist ein Umlenkspiegel 37 vorgesehen, der das von dem zweiten Objektiv 33 gesammelte Beobachtungslicht seitlich zu einem weiteren Umlenkspiegel 39 reflektiert. Das vom Umlenkspiegel 39 reflektierte Beobachtungslicht tritt dann mit kleinem Versatz durch den Strahlteiler 19 hindurch und gelangt schließlich entlang der optischen Achse 13 durch die Öffnung 5 über Spiegel 45 und Strahlteiler 47 hindurch zu einem (nicht gezeigten) Beobachtungssystem oder dem dargestellten Detektor 51 mit einem davor angeordneten Pinhole 49 eines Lichtdetektionssystems des Mikroskops 11.

Die optische Achse 41 des zweiten Objektivs 33 ist relativ zu der optischen Achse 13 um einen Winkel b₂ geneigt, wobei der Winkel b₂ vorzugsweise den gleichen Betrag hat wie der gegenüberliegende Winkel b₁.

Die optischen Achsen 31 und 41 der beiden Objektive 25 und 33 schließen einen Winkel a ein, der im Beispiel der Fig. 1 etwas kleiner als 90° ist, jedoch in einer alternativen Ausführungsform auch exakt 90° betragen kann.

Durch eine solche Anordnung des Beobachtungsobjektivs 33 relativ zum Beleuchtungsobjektiv 25 werden bei der erfindungsgemäßen Doppelobjektiv-Baueinheit 1 die Vorteile extrem hoher Auflösung wie bei dem Rastermikroskop nach der DE-OS 43 26 473 erhalten, und es sind Aufnahmen mit der höchsten Auflösung, die ein Fernfeld-Lichtmikroskop ohne die Benutzung von Interferenz haben kann, möglich. Die erfindungsgemäße Doppelobjektiv-Baueinheit 1 kann darüber hinaus bei einem konventionellen Rastermikroskop, welches an der Schnittstelle zum Objektiv einen gemeinsamen Strahlengang für Beleuchtung und Beobachtung durch ein herkömmliches Objektiv aufweist, eingesetzt werden, da der Beleuchtungsstrahlengang und der Beobachtungsstrahlengang der Doppelobjektiv-Baueinheit 1 im Bereich der Lichtdurchtrittsöffnung 5 und somit im Anschlußbereich zum herkömmlichen Mikroskopaufbau gemeinsam im wesentlichen längs der Achse 13 verlaufen, so daß hinsichtlich des Beleuchtungs-/Beobachtungsstrahlenganges des herkömmlichen Mikroskopaufbaus Anschlußkompatibilität bei der erfindungsgemäßen Doppelobjektiv-Baueinheit 1 besteht.

Da die beiden Objektive 25 und 33 und das Lichtumlenksystem 19, 21, 23, 37, 39 in einem gemeinsamen Gehäuse 3 untergebracht sind, kann die erfindungsgemäße Doppelobjektiv-Baueinheit 1 im wesentlichen wie ein herkömmliches Einzelobjektiv bei einem konventionellen Rastermikroskop gehandhabt werden. Vorzugsweise ist die Doppelobjektiv-Baueinheit 1 abnehmbar an dem Mikroskopaufbau 11 befestigbar, so daß sie bei Bedarf gegen ein anderes Objektiv, beispielsweise ein herkömmliches Einzelobjektiv, ausgetauscht werden kann.

Die Objektive 25 und 33 bestehen vorzugsweise aus konventionellen Objektivlinsen. Insbesondere können die Objektive 25 und 33 gleichen Aufbau aufweisen und gleiche numerische Apertur besitzen, wobei die numerische Apertur möglichst groß sein sollte und wobei die Objektive 25 und 33 vorzugsweise einen großen Arbeitsabstand und ein kleines Sichtfeld aufweisen sollten.

Bei dem Ausführungsbeispiel gemäß Fig. 1 sind die optischen Elemente im Beobachtungsstrahlengang 35 (insbesondere die Umlenkspiegel 37 und 39) in bezug auf das Gehäuse 3 ortsfest angeordnet, so daß der Beobachtungspunkt festliegt und als Referenz für die Einstellung des Beleuchtungspunktes dienen kann. Die Justage des Beleuchtungsstrahlenganges erfordert dann fünf Freiheitsgrade, die beispielsweise durch die Umlenkspiegel 21 und 23 mit jeweils zwei Freiheitsgraden und durch das Objektiv 25 mit einem Freiheitsgrad zur Verfügung gestellt werden können.

Mit 43 ist in Fig. 1 ein mittels einer Rastersteuerung gesteuert bewegbarer Objektträgertisch bezeichnet, der eine Objektrasterung durch kontrollierte Bewegung des Objektes relativ zum Mikroskop ermöglicht. Vorzugsweise kann der Objektträgertisch 43 Translationsbewegungen und Rotationsbewegungen unter Kontrolle der Rastersteuerung ausführen.

Die erfindungsgemäße Doppelobjektiv-Baueinheit 1 kann auch bei einem Mikroskop mit Strahlrasterung eingesetzt werden, bei der eine (nicht gezeigte) Rastereinheit des kommerziellen Mikroskops 11 den gemeinsamen Beleuchtungs- und Beobachtungsstrahlengang so bewegt, daß der Beleuchtungspunkt und der Beobachtungspunkt unter kontrollierten Bedingungen relativ zu dem Objekt bewegt werden, was einen wesentlichen Geschwindigkeitsvorteil mit sich bringt. Die Betriebsarten Objektrasterung und Strahlrasterung können ggf. auch kombiniert werden.

## Patentansprüche

1. Doppelobjektiv-System für ein Mikroskop, insbesondere Rastermikroskop, mit einem ersten Objektiv (25), das zur Fokussierung von Licht einer Objektbeleuchtungsquelle auf einen Objektpunkt (27) in einem Beleuchtungsstrahlengang (15) vorgesehen ist, und mit einem zweiten Objektiv (33), das zur Sammlung von Licht, das von dem Objektpunkt (27) ausgeht, in einem Beobachtungsstrahlengang (35) vorgesehen ist, wobei die Beobachtungsrichtung des zweiten Objektivs (33) unter einem Winkel (α) zur Beleuchtungsrichtung des ersten Objektivs (25) steht, wobei der Winkel (α) zwischen der Beleuchtungsrichtung des ersten Objektivs (25) und der Beobachtungsrichtung des zweiten Objektivs (33) etwa 90° beträgt, **dadurch gekennzeichnet,**
**dass** die beiden Objektive (25, 33) unter Bildung einer beide Objektive enthaltenden Doppelobjekt-Baueinheit (3, 19, 21, 23, 25, 33, 37, 39) an einem gemeinsamen Halter (3) befestigt sind, dass der gemeinsame Halter ein die beiden Objektive (25, 33) und das Lichtumlenksystem (19, 21, 23, 37, 39) enthaltendes Gehäuse (3) aufweist, das eine Lichtdurchtrittsöffnung (5) bildende Gehäuseöffnung für die Zuführung von Licht einer Objektbeleuchtungsquelle aufweist und ferner ein Lichtumlenksystem (19, 21, 23, 37, 39) enthält, das den Beleuchtungsstrahlengang (15) oder / und den Beobachtungsstrahlengang (35) derart formt, dass das von dem zweiten Objektiv (33) kommende Beobachtungslicht die Doppelobjektiv-Baueinheit (3, 19, 21, 23, 25, 33, 37, 39) durch die Lichtdurchtrittsöffnung (5) hindurch verläßt.

2. Doppelobjektiv-System nach Anspruch 1, **dadurch gekennzeichnet, dass** das Gehäuse (3) an der Objektivhalterung eines Mikroskops (11) - insbesondere drehbar um die Achse der Objektivhalterung - befestigbar ist, um den Beleuchtungsstrahlengang (15) der Doppelobjektiv-Baueinheit in den Beleuchtungsstrahlengang des Mikroskops (11) zu integrieren und um den Beobachtungsstrahlengang (35) der Doppelobjektiv-Baueinheit in den Beobachtungsstrahlengang des Mikroskops (11) zu integrieren.

3. Doppelobjektiv-System nach einem der vorhergehenden Ansprüche, **dadurch gekennzeichnet, dass** das erste Objektiv (25) oder / und das zweite objektiv (33) zur wahlweisen Änderung des Winkels (α) zwischen der Beleuchtungseinrichtung und der Beobachtungsrichtung bewegbar gehalten ist.

4. Doppelobjektiv-System nach einem der vorhergehenden Ansprüche, **dadurch gekennzeichnet, dass** die optische Achse (31) des ersten Objektivs (25) relativ zu der Achse (13) der Lichtdurchtrittsöffnung um einen ersten Neigungswinkel (β₁) geneigt verläuft und dass lichteintrittsseitig des ersten Objektivs (25) Lichtumlenkelemente (17, 21, 23) des Lichtumlenksystems, insbesondere Umlenkspiegel, vorgesehen sind, die das längs der Achse (13) der Lichtdurchtrittsöffnung (5) einfallende Licht der Objektbeleuchtungsquelle zum Durchgang durch das erste Objektiv (25) umlenken.

5. Doppelobjektiv-System nach einem der vorhergehenden Ansprüche, **dadurch gekennzeichnet, dass** die optische Achse (41) des zweiten Objektivs (33) relativ zu der Achse (13) der Lichtdurchtrittsöffnung um einen Neigungswinkel (β₂) geneigt verläuft und daß lichtaustrittsseitig des zweiten Objektivs (33) Lichtumlenkelemente (37, 39, 19) des Lichtumlenksystems, insbesondere Umlenkspiegel, vorgesehen sind, die das von dem zweiten Objektiv (33) kommende Beobachtungslicht umlenken, so dass es längs der Achse (13) der Lichtdurchtrittsöffnung (5) die Doppelobjektiv-Baueinheit verläßt.

6. Doppelobjektiv-System nach einem der vorhergehenden Ansprüche, **dadurch gekennzeichnet, dass** das Lichtumlenksystem optische Lichtleitfasern enthält.

7. Doppelobjektiv-System nach einem der vorhergehenden Ansprüche, **dadurch gekennzeichnet, dass** die beiden Objektive (25, 33) im wesentlichen gleiche numerische Apertur aufweisen.

8. Mikroskop, insbesondere Rastermikroskop, mit einem Doppelobjektiv-System nach einem der vorhergehenden Ansprüche.

9. Mikroskop nach Anspruch 8, **dadurch gekennzeichnet, dass** es ein Fluoreszenzmikroskop ist.

10. Mikroskop nach Anspruch 8, **dadurch gekennzeichnet, dass** es zur Beobachtung von Streu- und / oder Reflexionslicht eingerichtet ist.

## Claims

1. Dual lens system for a microscope, in particular for a scanning microscope having a first lens (25) which is provided for focussing light from an object light source on to an object point (27) in an illumination beam path (15), and having a second lens (33) which is provided for collecting light, which emanates from the object point (27), in an observation beam path (35), wherein the viewing direction of the second lens (33) is at an angle (α) with respect to the illumination direction of the first lens (25), wherein the angle (α) between the illumination direction of the first lens (25) and the viewing direction of the second lens (33) is about 90°, **characterised in that** the two lenses (25, 33) are attached to a common holder (3) thus forming a dual object structural unit (3, 19, 21, 23, 25, 33, 37, 39) which includes both lenses, the common holder comprises a housing (3) which includes the two lenses (25, 33) and the light deflecting system (19, 21, 23, 37, 39) and which comprises a housing orifice, which forms a light port (5), for the supply of light from an object light source and said housing also contains a light deflecting system (19, 21, 23, 37, 39) which forms the illumination beam path (15) and/or the observation beam path (35) in such a manner that the observation light issuing from the second lens (33) leaves the dual lens structural unit (3, 19, 21, 23, 25, 33, 37, 39) through the light port (5).

2. Dual lens system as claimed in claim 1, **characterised in that** the housing (3) can be attached to the lens holder of a microscope (11), in particular in such a manner as to be able to rotate about the axis of the lens holder, in order to integrate the illumination beam path (15) of the dual lens structural unit into the illumination beam path of the microscope (11) and in order to integrate the observation beam path (35) of the dual lens structural unit into the observation beam path of the microscope (11).

3. Dual lens system as claimed in any one of the preceding claims, **characterised in that** the first lens (25) and/or the second lens (33) is held in a movable manner for the purpose of changing the angle (α) between the illumination device and the viewing direction as desired.

4. Dual lens system as claimed in any one of the preceding claims, **characterised in that** the optical axis (31) of the first lens (25) extends in an inclined manner relative to the axis (13) of the light port about a first angle of inclination (β₁) and that provided on the side of the first lens (25) on which light exits are light deflecting elements (17, 21, 23) of the light deflecting system, in particular deflecting mirrors which deflect the light of the object light source incident along the axis (13) of the light,port (5) to allow it to pass through the first lens (25).

5. Dual lens system as claimed in any one of the preceding claims, **characterised in that** the optical axis (41) of the second lens (33) extends in an inclined manner relative to the axis (13) of the light port about an angle of inclination (β₂) and that provided on the side of the second lens (33) on which light exits are light deflecting elements (37, 39, 19) of the light deflecting system, in particular deflecting mirrors which deflect the observation light issuing from the second lens (33), so that it leaves the dual lens structural unit along the axis (13) of the light port (5).

6. Dual lens system as claimed in any one of the preceding claims, **characterised in that** the light deflecting system contains optical light-conducting fibres.

7. Dual lens system as claimed in any one of the preceding claims, **characterised in that** the two lenses (25, 33) comprise substantially the same number of apertures.

8. Microscope, in particular a scanning microscope, having a dual lens system as claimed in any one of the preceding claims.

9. Microscope as claimed in claim 8, **characterised in that** it is a fluorescence microscope.

10. Microscope as claimed in claim 8, **characterised in that** it is arranged for observing scattered and/or reflection light.

## Revendications

1. Système à objectif double pour un microscope, notamment un microscope de trame, avec un premier objectif (25) qui est prévu pour la focalisation de la lumière d'une source d'éclairage d'objet sur un point d'objet (27) dans un trajet de rayons d'éclairage (15), et avec un deuxième objectif (33) qui est prévu pour recueillir la lumière, qui part du point d'objet (27), dans un trajet de rayons d'éclairage (35), où la direction d'observation du deuxième objectif (33) s'étend selon un angle (α) à la direction d'éclairage du premier objectif (25), où l'angle (α) entre la direction d'éclairage du premier objectif (25) et la direction d'observation du deuxième objectif (33) est d'environ 90°, **caractérisé**
**en ce que** les deux objectifs (25, 33), en formant une unité de construction à objectif double (3, 19, 21, 23, 25, 33, 37, 39) contenant les deux objectifs sont fixés à un support commun (3), en ce que le support commun présente un boîtier (3) contenant les deux objectifs (25, 23) et le système de déviation de lumière (19, 21, 23, 37, 39), qui présente une ouverture de boîtier formant une ouverture de passage d'air (5) pour l'amenée de la lumière d'une source d'éclairage d'objet et comprend en outre un système de déviation de lumière (19, 21, 23, 37, 39) qui forme le trajet de rayons d'éclairage (15) et/ou le trajet de rayons d'observation (35) de telle sorte que la lumière d'observation provenant du deuxième objectif (33) quitte l'unité de construction à objectif double (3, 19, 21, 23, 25, 33, 37, 39) à travers l'ouverture de passage de lumière (5).

2. Système à objectif double selon la revendication 1, **caractérisé en ce que** le boîtier (3) est fixé au support de l'objectif d'un microscope (11), en particulier d'une manière tournante autour de l'axe du support d'objectif pour intégrer le trajet des rayons d'éclairage (15) de l'unité de construction à objectif double dans le trajet de rayons d'éclairage du microscope (11) et pour intégrer le trajet des rayons d'observation (35) de l'unité de construction à objectif double dans le trajet des rayons d'éclairage du microscope (11).

3. Système à objectif double selon l'une des revendications précédentes, **caractérisé en ce que** le premier objectif (25) et/ou le deuxième objectif (33), pour modifier sélectivement l'angle (α), est retenu d'une manière mobile entre l'installation d'éclairage et la direction d'observation.

4. Système à objectif double selon l'une des revendications précédentes, **caractérisé en ce que** l'axe optique (31) du premier objectif (25) est incliné relativement à l'axe (13) de l'ouverture de passage de lumière selon un premier angle d'inclinaison (β₁), et **en ce que** sont prévus, côté entrée de la lumière, du premier objectif (25), des éléments de renvoi de lumière (17, 21, 23) du système de déviation de lumière, notamment des miroirs de renvoi qui dévient la lumière de la source d'éclairage d'objet incident le long de l'axe (13) de l'ouverture de passage de lumière (5) pour le passage à travers le premier objectif (25).

5. Système à objectif double selon l'une des revendications précédentes, **caractérisé en ce que** l'axe optique (41) du deuxième objectif (33) est incliné relativement à l'axe (13) de l'ouverture de passage de lumière selon un angle d'inclinaison ((β₂), et **en ce que** sont prévus, côté sortie de la lumière, du deuxième objectif (33) des éléments de renvoi de lumière (37, 39, 19) du système de déviation de lumière, notamment des miroirs de renvoi qui dévient la lumière d'observation provenant du deuxième objectif (33) de telle sorte qu'elle quitte le long de l'axe (13) de l'ouverture de passage d'air (5) l'unité de construction à objectif double.

6. Système à objectif double selon l'une des revendications précédentes, **caractérisé en ce que** le système de renvoi de lumière comporte des fibres optiques.

7. Système à objectif double selon l'une des revendications précédentes, **caractérisé en ce que** les deux objectifs (25, 33) ont sensiblement la même ouverture numérique.

8. Microscope, notamment microscope de trame, avec un système à objectif double selon l'une des revendications précédentes.

9. Microscope selon la revendication 8, **caractérisé en ce que** celui-ci est un microscope à fluorescence.

10. Microscope selon la revendication 8, **caractérisé en ce que** celui-ci est réalisé pour l'observation de la lumière diffusée et/ou de réflexion.
